# EUROPEAN PATENT APPLICATION

(11) **EP 1 542 107 A1**
(43) Date of publication of application: **15.06.2005**
(21) Application number: 03748543.0
(22) Date of filing: 19.09.2003
(51) Int. Cl.: G05B 19/418

(54) **PARTS STOCK AMOUNT MANAGEMENT DEVICE**

(30) Priority: 19.09.2002 WO PCT/JP02/09604
(71) Applicant: Honda Giken Kogyo Kabushiki Kaisha, Minato-ku, Tokyo 107-8556 (JP)
(72) Inventor: IIDA, Koichi, Honda Giken Kogyo K. K., Tokyo 107-8556 (JP); TANAKA, Hidenobu, Honda Giken Kogyo K. K., Tokyo 107-8556 (JP); OTSUBO, Motokazu, Honda Giken Kogyo K. K., Tokyo 107-8556 (JP); JODOI, Takafumi, Honda Giken Kogyo K. K., Tokyo 107-8556 (JP); IMAGAWA, Taro, Honda Giken Kogyo K. K., Tokyo 107-8556 (JP)
(74) Representative: Poulin, Gérard
(86) International application number: PCT/JP2003/011966
(87) International publication number: WO 2004/027533

(57) **Abstract**

Distribution of the parts (parts A, parts B), including shipment by a part supplier, delivery to the part orderer to be used in product manufacturing, is divided into stages in time-sequence (under transportation or at a location including the parking lot, warehouse, temporary storage facility, line side, etc.) and each stage is inputted with incoming and outgoing quantity information of the part orderer to compute the quantity of inventory from a difference therebetween. Information on the computed quantity of inventory is sent through terminal computers to a host computer such that it consolidates the sent information to be centralized and manages at a lump. Further, among of the quantities of inventory at divided stages, the quantity of inventory computed based on the incoming and outgoing quantity information of the part orderer is recognized as the actual quantity of inventory. With this, it becomes possible to provide a part inventory management system that manages the quantity of inventory in time-sequence and can perform inventory management appropriately regardless of differences in part distribution routes.

## Description

### TECHNICAL FIELD

The present invention relates to a part inventory management system for managing the quantity of inventory of parts.

### BACKGROUND ART

In order to appropriately order the parts constituting a product, it is needed to recognize the quantity of inventory in time-sequence. Management of the number of the parts, i.e., the quantity of inventory of delivered parts has therefore conventionally been performed by affixing a barcode indicating the type(s), delivery date, number of units, and other part information on the box in which the parts are packaged and by inputting the barcode information into a computer via a barcode reader during acceptance.

There occurs a so-called lead time, including a time for distribution (logistics), until the parts are actually delivered to be used in product manufacturing after ordered. For that reason, it is preferable to manage the quantity of inventory in time-sequence along the distribution route after the parts are shipped from the part supplier, supplied to the orderer, and are finally used in the manufacture of the product such that the quantity of inventory is recognized more accurately.

The distribution route from the part supplier to the assembly plant (part orderer) also varies depending on the parts. For example, the parts are delivered immediately to the assembly plant from the part supplier when the part supplier is located near the assembly plant, whereas the parts are sometimes delivered via a transit warehouse when the part supplier is at a distant location from the assembly plant. Accordingly, it is preferable to implement the inventory management appropriately regardless of differences in the part distribution route.

### DISCLOSURE OF INVENTION

Therefore, an object of the present invention is to overcome the abovementioned drawbacks of the prior art and to provide a part inventory management system that can manage the quantity of inventory in time-sequence in the lead time until the parts are actually delivered to be used in product manufacturing after ordered, and can manage inventory appropriately regardless of differences in the part distribution route.

In order to achieve the object, as recited in claim 1 described below, the present invention is configured to have a system for managing a quantity of inventory of parts constituting a product, in which distribution of the parts, including shipment by a part supplier, delivery to an orderer who orders the parts to be used in manufacturing the product, is divided into a plurality of stages in time-sequence, comprising: part order quantity computing means for computing a part order quantity to be directed to the part supplier, by subtracting a subject-to-subtraction quantity of inventory, from a required quantity of the parts computed based on a production schedule; first inventory quantity computing means for inputting incoming quantity information and outgoing quantity information of the orderer of the parts and for computing a quantity of inventory of the parts at one of the stages from a difference between the incoming quantity information and the outgoing quantity information; second inventory quantity computing means for inputting the incoming quantity information and the outgoing quantity information of the orderer of the parts and for computing quantities of inventory of the parts at the other stages from the difference between the incoming quantity information and the outgoing quantity information; inventory information sending means for sending information on the quantity of inventory of the parts at the one of the stages and the quantities of inventory of the parts at the other stages via transmitting means; and inventory managing means for consolidating the sent inventory information to be centralized such that the inventory information is managed at a lump; wherein the inventory managing means outputs the quantity of inventory of the parts computed by the second inventory quantity computing means to the part order quantity computing means as the subject-to-subtraction quantity of inventory in computing the part order quantity.

Thus, since it is configured such that, the distribution of the parts is divided into a plurality of stages in time-sequence and the quantities of inventory at the stages are managed at a lump, it becomes possible to manage the quantity of inventory in the distribution route in-time sequence fashion, thereby enabling to recognize the quantity of inventory more accurately.

Further, since it is configured such that, the incoming quantity information and outgoing quantity information of the part orderer are inputted at the stages such that the quantity of inventory can be computed from the difference therebetween, it becomes possible to recognize the quantity of inventory at each stage more accurately.

Further, since it is configured such that, among of the quantities of inventory at stages, the quantity of inventory computed based on the incoming and outgoing quantity information of the part orderer, is regarded as the subject-to-subtraction quantity of inventory in computing the part order quantity, it becomes possible to implement inventory management regardless of differences in the part distribution route.

### BRIEF DESCRIPTION OF THE DRAWINGS

FIG. 1 is an overall schematic view of the part inventory management system according to an embodiment of the present invention;
FIG. 2 is a flowchart showing the operation of computation of the part order quantity implemented in a host computer of the system illustrated in FIG. 1;
FIG. 3 is a table showing the inventory information displayed on the display of each terminal computer on the basis of an inventory database of the system illustrated depicted in FIG. 1; and
FIG. 4 is an explanatory view showing inventory fluctuation in part distribution route divided into stages.
the inventory information displayed on the displays of each terminal computer on the basis of an inventory database of the system.

### BEST MODE FOR CARRYING OUT THE INVENTION

The part inventory management system according to an embodiment of the present invention will be described hereinafter with reference to the accompanying drawings.

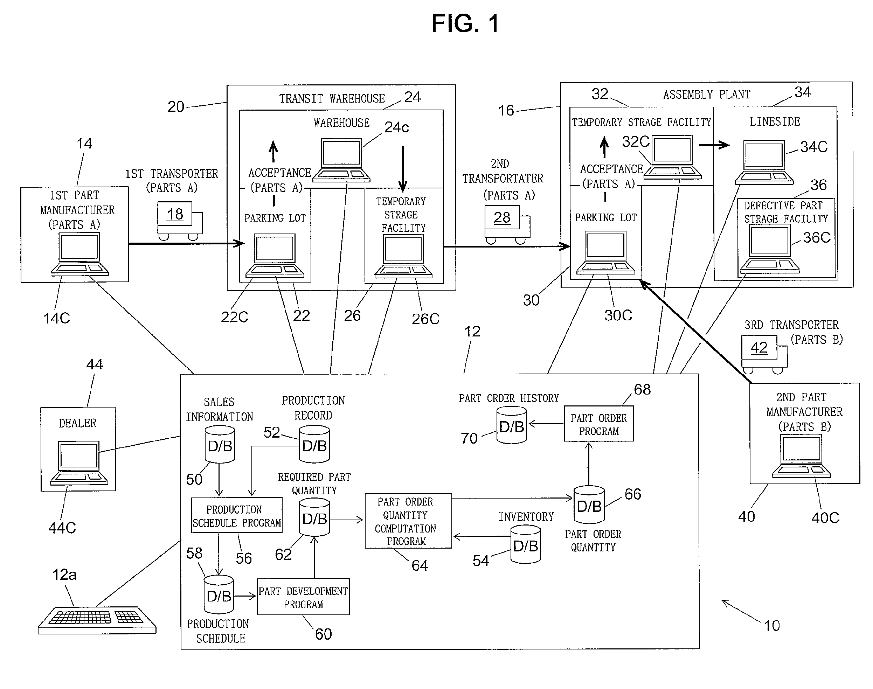

FIG. 1 is an overall schematic view of the part inventory management system according to this embodiment. The reference numeral 10 in the figure generally indicates the part inventory management system.

The part inventory management 10 has a host computer 12 provided with various types of databases and arithmetic programs (described hereinafter), and a plurality of terminal computers disposed at the stages or processes of the part distribution route (the transport route of the parts from the part supplier(s) to the assembly plant) and connected to the host computer 12 via the internet or other communication network.

First explaining the part distribution route (indicated by the thick-lined arrow) with reference to the figure, a first part manufacturer (part supplier) 14 manufactures or produces parts (a group of parts) A in response to an order from an assembly plant (which orders the parts) 16. The first part manufacturer 14 is provided with a first part manufacturer computer 14C that sends the shipping quantity of parts A to the host computer 12, receives the order information of the parts A computed by the host computer 12 as described hereinafter, and displays the results on a display.

The parts A manufactured by the first part manufacturer 14 are loaded onto a first transporter (freight truck) 18 and are shipped to a transit warehouse 20 located between the first part manufacturer 14 and the assembly plant 16. The parts A are unloaded when the first transporter 18 carrying the parts A arrives at a parking lot 22 of the transit warehouse 20. The parking lot (parking lot of the transit warehouse) 22 is provided with a parking lot computer (computer used at the parking lot of the transit warehouse) 22C, and the incoming (warehousing) quantity and outgoing (dispatching) quantity of the parts A (incoming quantity information and outgoing quantity information from the first part manufacturer 14) are inputted or entered therein. The parking lot computer 22C computes the quantity of inventory in the parking lot 22 from the difference between the incoming quantity and outgoing quantity of parts A thus inputted, and sends the result to the host computer 12.

The parts A unloaded at the parking lot 22 are carried into a warehouse 24 after they are accepted by an orderer (those who ordered the parts) and the type and quantity of the parts A have been checked. Acceptance is performed by inputting or entering the barcode information affixed to the box enclosing the parts A into a computer via a barcode reader. Computation of the incoming quantity of parts A is performed from this acceptance by the orderer, and ownership of the parts A for which acceptance is completed is transferred from the first part manufacturer 14 to the orderer. Specifically, the parts A carried into the warehouse 24 become the property of the orderer.

The warehouse 24 is provided with a warehouse computer 24C, and the incoming inventory and outgoing inventory of parts A (incoming inventory information and outgoing inventory information of the orderer) are inputted or entered therein. The warehouse computer 24C computes the quantity of inventory (stored quantity) in the warehouse 24 from the difference between the incoming quantity and outgoing quantity of parts A thus inputted, and sends the result to the host computer 12.

Some of parts A (stored in the warehouse 24) that are required at the assembly plant 16 are partially moved to a temporary storage facility (temporary storage facility for warehousing) 26. The temporary storage facility 26 is provided with a temporary storage facility computer (computer of the temporary storage facility for warehousing) 26C, and the incoming quantity and outgoing quantity of parts A (incoming quantity information and outgoing quantity information of the orderer) are inputted or entered therein. The temporary storage facility computer 26C computes the quantity of inventory (temporarily stored quantity) in the temporary storage facility 26 from the difference between the incoming quantity and outgoing quantity of parts A thus inputted, and sends the result to the host computer 12.

The parts A temporarily stored in the temporary storage facility 26 are loaded onto a second transporter (freight truck) 28 and are transported to the assembly plant 16. The parts A are unloaded when the second transporter 28 carrying the parts A arrives at a parking lot 30 of the assembly plant 16. The parking lot (parking lot of the assembly plant) 30 is provided with a parking lot computer (computer used at the parking lot of the assembly plant) 30C, and the incoming quantity and outgoing quantity of parts A (incoming quantity information and outgoing quantity information of the orderer) are inputted or entered therein. The parking lot computer 30C computes the quantity of inventory in the parking lot 30 from the difference between the incoming quantity and outgoing quantity of parts A thus inputted, and sends the result to the host computer 12.

The parts A unloaded at the parking lot 30 are stored in a temporary storage facility (temporary storage facility used by the assembly plant) 32. The temporary storage facility 32 has a temporary storage facility computer (computer of the temporary storage facility used by the assembly plant) 32C, and the incoming quantity and outgoing quantity of parts A (incoming quantity information and outgoing quantity information of the orderer) are inputted therein. The temporary storage facility computer 32C computes the quantity of inventory (temporarily stored quantity) in the temporary storage facility 32 from the difference between the incoming quantity and outgoing quantity of parts A thus inputted, and sends the result to the host computer 12.

The parts A temporarily stored in the temporary storage facility 32 are then carried into a line side 34 at a scheduled time and are used in the manufacture of a product (an automobile, for example). The line side 34 is provided with a line side computer 34C, and the incoming quantity and outgoing quantity of parts A (incoming quantity information and outgoing quantity information of the orderer) are inputted or entered therein. The line side computer 34C computes the quantity of inventory in the line side 34 from the difference between the incoming quantity and outgoing quantity of parts A thus inputted (quantity used in manufacturing), and sends the result to the host computer 12. The line side computer 34C also sends the production record of the products to the host computer 12.

One or several of the parts A that is found to be defective is treated as a defective part(s) in the line side 34, and is moved to a defective part storage facility 36. The defective part storage facility 36 is provided with a defective part storage facility computer 36C, the incoming quantity and outgoing quantity of the defective parts A are inputted or entered therein, and the quantity of inventory in the defective part storage facility 36 is sent to the host computer 12.

A second part manufacturer (part supplier) 40 manufactures part (a group of parts) B in response to an order from the assembly plant 16. The second part manufacturer 40 is provided with a second part manufacturer computer 40C that sends the shipment quantity of the parts B to the host computer 12, receives the order information of the parts B computed by the host computer 12, and displays the results on a display.

The parts B manufactured by the second part manufacturer 40 are loaded onto a third transporter (freight truck) 42 and are shipped to the assembly plant 16. The parts B are unloaded when the third transporter 42 carrying the parts B arrives at the parking lot 30 of the assembly plant 16. The incoming quantity and the outgoing quantity of parts B (incoming quantity information and outgoing quantity information from the second part manufacturer 40) are inputted or entered to the parking lot computer 30C disposed at the parking lot 30, in the same manner as the case of parts A. The parking lot computer 30C computes the quantity of inventory in the parking lot 30 from the difference between the incoming quantity and outgoing quantity of parts B thus inputted, and sends the result to the host computer 12.

The parts B unloaded at the parking lot 30 are carried into the temporary storage facility 32 after they are accepted by the orderer and the type and quantity of the parts B have been checked. Computation of the quantity of inventory of the parts B is performed from this acceptance by the orderer, and ownership of the parts B for which acceptance is completed is transferred from the second part manufacturer 40 to the orderer. Specifically, the parts B carried into the line side 34 become the property of orderer of the parts.

The incoming quantity and the outgoing quantity of parts B (incoming quantity information and outgoing quantity information of the orderer) are inputted or entered to the temporary storage facility computer 32C disposed at the temporary storage facility 32, in the same manner as in the case of parts A. The temporary storage facility computer 32C computes the quantity of inventory (temporarily stored quantity) in the temporary storage facility 32 from the difference between the incoming quantity and outgoing quantity of parts B thus inputted, and sends the result to the host computer 12.

The parts B temporarily stored in the temporary storage facility 32 are then carried into the line side 34. The incoming quantity and the outgoing quantity of parts B (incoming quantity information and outgoing quantity information of the orderer) are inputted or entered to the line side computer 34C disposed at the line side 34, in the same manner as in the case of parts A. The line side computer 34C computes the quantity of inventory in the line side 34 from the difference between the incoming quantity and outgoing quantity of parts B (quantity used in manufacturing) thus inputted, and sends the result to the host computer 12.

The finished products are sold to users via a dealer(s) 44. The dealer(s) 44 is provided with a dealer computer 44C, which sends the information (type or quantity) of the products sold (or contracted) to the host computer 12.

The terminal computers (except for the dealer computer 44C) disposed in the plurality of temporally sequential stages along the distribution route thus compute the quantity of inventory (including the temporarily stored quantity) from the difference between the incoming quantity and outgoing quantity of the parts in each stage, and send (transmit) the information to the host computer 12 via the internet or other communication network. The terminal computers also receive the inventory information (described hereinafter) of the stages that has been consolidated and centralized by the host computer 12, and display the information on their respective displays.

Thus, this embodiment is configured such that, the incoming quantity information and outgoing quantity information of the parts from the part manufacturers are inputted or entered to the terminal computers, the quantities of inventory at any of the stages are computed based on the difference between the aforementioned information, the incoming quantity information and outgoing quantity information of the orderer are entered to the terminal computers, and the quantity of inventory in each of the remaining stages can be computed based on the difference between these quantities in the information. It is therefore possible to accurately recognize the quantity of inventory.

Summarizing the operation of the host computer 12, the host computer 12 prepares or creates various types of databases based on the information and the like inputted or entered in the manner as described above, and executes calculations according to a plurality of programs necessary for ordering parts based on the databases thus prepared.

Specifically, the host computer 12 prepares a sales information database (D/B) 50 based on the product sales information sent from the dealer computer 44C, and prepares a production record database 52 based on the production record information sent from the line side computer 34C.

The host computer 12 also prepares an inventory database 54 based on the information regarding the quantity of inventory of parts sent from the computers disposed in the stages along the part distribution route.

According to a production schedule program 56, a production schedule for a certain period of time is prepared based on the sales information database 50 and production record database 52 thus prepared, and a production schedule database 58 is prepared. According to a part development program 60, the type and necessary quantity of the parts to be used in the product are computed and a required part quantity database 62 is prepared based on the production schedule database 58 thus created.

In accordance with a part order quantity computation program 64, the part order quantity is computed based on the actual inventory quantity stored in the inventory database 54 and on the required part quantity database 62, and a part order quantity database 66 is prepared. In accordance with a part order quantity computation program 68, the parts are ordered to the part manufactures(s) based on the part order quantity database 66, and the contents of the order is stored and updated in a part order history database 70.

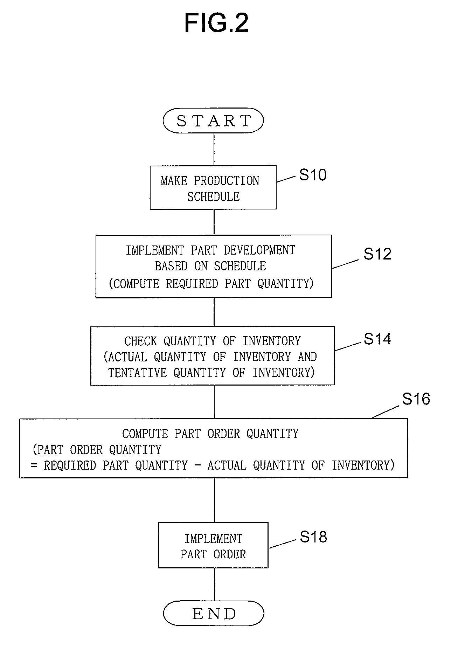

The operation of the abovementioned host computer 12 will be described in detail with reference to FIG. 2. FIG. 2 is a flowchart showing the operation of computation of the part order quantity implemented in the host computer 12.

Explaining this, first, in S 10, a production schedule as to how many of what product are to be produced within a scheduled period of time, is made or planned (according to the production schedule program 56) based on the sales information (sales information database 50) and the past production record (production record database 52). Next in S12, based on the production schedule thus prepared, part development is implemented, i.e., necessary kind (type) and quantity of the parts (required part quantity) are computed (according to the part development program 60).

Then, in S 14, the quantity of inventory of the parts is checked.

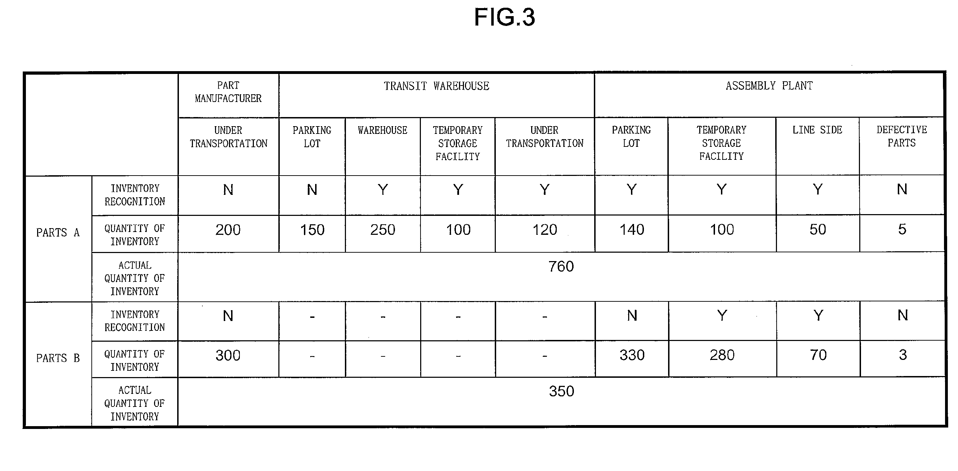

FIG. 3 is a table showing the inventory information displayed on the display of each terminal computer based on the inventory database 54.

As shown in the table, the stages in part distribution from the part manufacturer's shipment to the arrival to the assembly plant line side mentioned above are divided in time-sequence and the information concerning the quantity of inventory of the parts sent from the computers disposed in the individual stages are each described. Specifically, the quantity of inventory in each stage is tabulated and shown in a consolidated fashion, such that the operator assigned to each stage can manage (check) the quantity of inventory in a lump. The quantity of inventory in the distribution route can thereby be managed in a time-sequential fashion, whereby it is possible to more accurately keep track of the quantity of inventory.

In the figure, the symbols "N," "Y," and "-" in the inventory recognition column indicate whether or not the quantity of inventory in the stage concerned is recognized as the actual quantity of inventory or as a tentative quantity of inventory. "N" indicates that the inventory is recognized as the tentative quantity of inventory, and "Y" indicates that the inventory is recognized as the actual quantity of inventory. "-" indicates that no stage exists for the parts concerned. The symbols "N," "Y," and "-" in the inventory recognition column can be entered via a keyboard 12a (illustrated in FIG. 1). Specifically, it is configured such that selections can be arbitrarily made for respective parts (a group of parts) by the operator.

In this embodiment, the inventory for which acceptance by the orderer is completed; i.e., the quantity of inventory obtained from the difference between the incoming quantity information of the orderer and the outgoing quantity information thereof is designated as "Y" (i.e., the actual quantity of inventory), and the quantity of inventory obtained from the difference between the incoming quantity information from the part manufacturer and the outgoing quantity information thereof is designated as "N" (i.e., the tentative quantity of inventory). Specifically, as regards the parts A, the total of 760 units existing in a location from the warehouse 24 of the transit warehouse 20 to the line side 34 of the assembly plant 16 are recognized as the actual quantity of inventory, and as regards the parts B, the total of 350 units existing between the temporary storage facility 32 and line side 34 of the assembly plant 16 are recognized as the actual quantity of inventory. In S14, the actual quantity of inventory expressed by "Y", the tentative quantity of inventory expressed by "N", and the sum of them are checked.

Returning to the explanation of the flowchart in FIG. 2, in S16, the actual quantity of inventory is allocated to (subtracted from) the required quantity of parts, and a part order quantity is computed (according to the part order quantity computation program 64). In S28, an order is issued to the part manufacturer(s) on the basis of the order quantity computed in S16 (according to the part order program 68).

Since it is configured such that, of among the inventories in the stages, the quantity of inventory computed based on the incoming quantity information of the orderer is recognized as the actual quantity of inventory, in other words, the quantity is regarded as the (subject-to-subtraction) quantity of inventory to be subtracted from the required quantity of parts in the production schedule. Inventory can therefore be appropriately managed regardless of differences in the part distribution routes. Since the decision as to whether or not to recognize it as the actual quantity of inventory can simply be changed via the keyboard 12a, it becomes easy to cope with the change in the distribution route, etc.

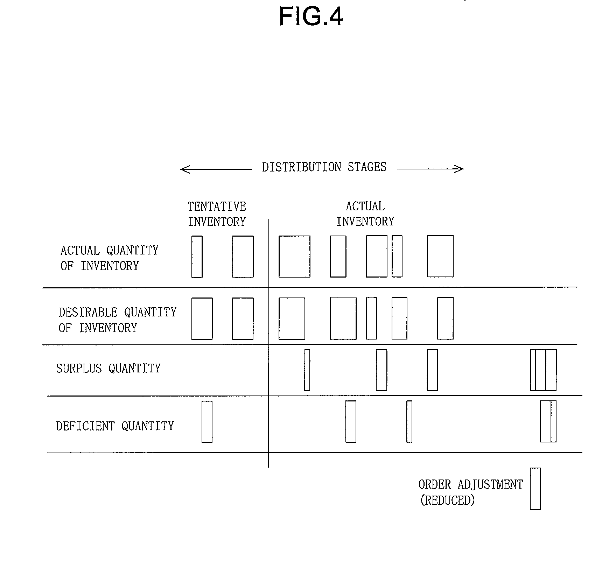

The above will be explained in further detail with reference to FIG. 4. Generally, the distribution (logistics) is varied or fluctuated as shown in the figure. This is caused by part shortages in the line side, distribution adjustments in response to the production schedule, and leading or trailing (lag) inherently involved in a system of distribution itself. The actual quantity of inventory therefore fluctuates from a "desirable inventory" determined when the production schedule or part lead time are taken into account.

When a surplus quantity of parts is compared to a deficient quantity thereof in the stages of distribution, since a surplus inventory exceeding the "desirable quantity of inventory" exists if the surplus quantity is greater than the deficient quantity as shown in FIG. 4, the quantity of order of the parts must be reduced. On the other hand, if the deficient quantity is greater, even if the parts are transported quickly from the upstream in the flow of distribution, since the quantity of inventory could fall below the "desirable quantity of inventory" in due course to incur shortage, the quantity of order of the parts must be increased.

In adjusting the order quantity of the parts, on a premise that the production should not be affected, it is significant how the quantity of inventory is reduced (or how closely the quantity approaches the "desirable quantity of inventory").

In the present invention, this adjustment of the order quantity is performed based on the actual quantity of inventory that has been accurately recognized. Specifically, the order quantity is adjusted based on the actual quantity of inventory that can surely arrive at the line side 34 at a desired time. The quantity of inventory can thereby be reduced without affecting the production.

It becomes also possible to absorb intermediate or long-term fluctuations in the quantity of inventory, thereby enabling to contribute to average the quantities of production and shipment at the part manufacturer.

Further, by excluding the tentative quantity of inventory from the (subject-to-subtraction) quantity of inventory, even if the actual quantity of inventory decreases due to a trouble under transportation by the second transporter 28, etc., the reduced quantity can be compensated for by the tentative quantity of inventory. With this, it becomes possible to prevent an unexpected shortage from happening beforehand.

Further, since, not only the actual quantity of inventory (that is the subject-to-subtraction quantity of inventory), but also the tentative quantity of inventory computed based on the incoming and outgoing inventory information from the part manufacturer, are checked in S16, it becomes possible to check whether delivery of the parts ordered are on schedule. Accordingly, shortages can be surely prevented beforehand by increasing the next order quantity or taking other measures when it is found that the delivery quantity will be reduced due to some troubles on the side of the part manufacturer, for example.

The part inventory management system according to the embodiment is configured to have a system 10 for managing a quantity of inventory of parts (parts A, parts B) constituting a product, in which distribution of the parts, including shipment by a part supplier (first part manufacturer 14, second part manufacturer 40), delivery to an orderer (in assembly plant 16) who orders the parts to be used in manufacturing the product, is divided into a plurality of stages in time-sequence (under transportation or at a location including the parking lot, warehouse, temporary storage facility, line side, etc.), comprising: part order quantity computing means (host computer 12, part development program 60, S12) for computing a part order quantity to be directed to the part supplier, by subtracting a subject-to-subtraction quantity of inventory, from a required quantity of the parts computed based on a production schedule; first inventory quantity computing means (parking lot computer 22C for the parts A, parking lot computer 30C for the parts B) for inputting incoming quantity information and outgoing quantity information of the orderer of the parts and for computing a quantity of inventory of the parts at one of the stages from a difference between the incoming quantity information and the outgoing information; second inventory quantity computing means (warehouse computer 24C, temporary storage facility computer 26C, parking lot computer 30C, temporary storage facility computer 32C, and line side computer 34C for the parts A, temporary storage facility computer 32C and line side computer 34C for the parts B) for inputting the incoming quantity information and the outgoing quantity information of the orderer of the parts and for computing quantities of inventory of the parts at the other stages from the difference between the incoming quantity information and the outgoing information; inventory information sending means (terminal computers) for sending information on the quantity of inventory of the parts at the one of the stages and the quantities of inventory of the parts at the other stages via transmitting means (internet or other communication network); and inventory managing means (host computer 12) for consolidating the sent inventory information to be centralized such that the inventory information is managed at a lump; wherein the inventory managing means outputs the quantity of inventory of the parts computed by the second inventory quantity computing means (the quantity of inventory expressed by "Y" in FIG. 3) to the part order quantity computing means as the subject-to-subtraction quantity of inventory in computing the part order quantity.

It should be noted that, although the two groups of parts A and B having different distribution routes are used as examples of the parts, these are only examples, and it is apparent that the types or kinds of the parts and distribution routes thereof may be one, or three or more groups.

It should also be noted that, although a freight truck is used as an example of the transporter, it is apparent that the transporter may also be a cargo ship, freight train, cargo plane, or the like.

It should further be noted that, although it is configured such that the quantity of inventory is sent to the host computer 12 from the terminal computers, the incoming quantity and outgoing quantity may additionally be sent to the host computer 12 such that the host computer 12 computes the quantity of inventory.

### INDUSTRIAL APPLICABILITY

According to the present invention, it becomes possible to provide a part inventory management system that can manage the quantity of inventory in time-sequence (under transportation or at a location including the parking lot, warehouse, temporary storage facility, line side, etc.) in a lead time from part ordering to delivery to be used in product manufacturing, and can perform inventory management appropriately regardless of differences in part distribution routes.

## Claims

1. A system for managing a quantity of inventory of parts constituting a product, in which distribution of the parts, including shipment by a part supplier, delivery to an orderer of the parts to be used in manufacturing the product, is divided into a plurality of stages in time-sequence, comprising:
a. part order quantity computing means for computing a part order quantity to be directed to the part supplier, by subtracting a subject-to-subtraction quantity of inventory, from a required quantity of the parts computed based on a production schedule;
b. first inventory quantity computing means for inputting incoming quantity information and outgoing quantity information of the orderer of the parts and for computing a quantity of inventory of the parts at one of the stages from a difference between the incoming quantity information and the outgoing quantity information;
c. second inventory quantity computing means for inputting the incoming quantity information and the outgoing quantity information of the orderer of the parts and for computing quantities of inventory of the parts at the other stages from the difference between the incoming quantity information and the outgoing quantity information;
d. inventory information sending means for sending information on the quantity of inventory of the parts at the one of the stages and the quantities of inventory of the parts at the other stages via transmitting means; and
e. inventory managing means for consolidating the sent inventory information to be centralized such that the inventory information is managed at a lump;
wherein the inventory managing means outputs the quantity of inventory of the parts computed by the second inventory quantity computing means to the part order quantity computing means as the subject-to-subtraction quantity of inventory in computing the part order quantity.
